# DEMANDE DE BREVET EUROPEEN

(11) **EP 3 031 504 A1**
(43) Date de publication de la demande: **15.06.2016**
(21) Numéro de dépôt: 15197333.6
(22) Date de dépôt: 01.12.2015
(51) Int. Cl.: A63H 23/04, A63H 23/14, A63H 27/00, B64C 27/00

(54) **MOBILE GLISSANT, NOTAMMENT HYDROFOIL, À PROPULSION PAR UN DRONE À VOILURE TOURNANTE**

(30) Priorité: 11.12.2014 FR 1462223
(71) Demandeur: Parrot, 75010 Paris (FR)
(72) Inventeur: SEYDOUX, Henri, 75017 PARIS (FR); ETCHEPARRE, Jean, 298067 SINGAPOUR (SG)
(74) Mandataire: Dupuis-Latour, Dominique

(57) **Abrégé**

Le mobile comprenant une structure statique glissante (100) pourvue dans une région inférieure, d'un ensemble d'éléments de glissement (110, 120g, 120d). Il comprend en outre des moyens (300) pour le montage amovible d'un drone à voilure tournante à rotors multiples (221-224) formant groupe propulseur (200), dont les rotors exercent chacun une poussée avec une composante selon un axe principal (X-X) de glissement du mobile, la commande proportionnelle et individualisée des rotors (221-224) permettant le pilotage du mobile en vitesse et en direction sans gouvernail.

## Description

La présente invention concerne d'une façon générale les mobiles glissants à voilure tournante, et en particulier des mobiles glissant sur l'eau, sur la neige ou sur la glace, en étant mus par un groupe propulseur aérien.

On connait déjà de tels mobiles, tels que des modèles réduits utilisés à des fins ludiques ou utilitaires. Un tel mobile comprend une hélice assurant une poussée dans la direction principale de déplacement, un ensemble de coques formant une structure de catamaran ou trimaran, et un gouvernail permettant d'assurer les changements de direction. D'autres modèles réduits possèdent une hélice aquatique.

Les WO 02/060550 A1 et US 2007/0010159 A1 décrivent un tel type de mobile, comprenant deux hélices contrôlables indépendamment, montées sur une coque commune

La présente invention vise à proposer un mobile à déplacement glissant dont la structure soit simple et robuste, sans pièces mobiles, qui puisse tirer parti d'un drone préexistant pour assurer un pilotage simple, intuitif et varié d'un tel drone, que ce soit à des fins ludiques ou utilitaires.

On propose à cet effet un mobile comprenant, comme divulgué par le WO 02/060550 A1 précité, une structure statique glissante pourvue dans une région inférieure d'un ensemble d'éléments de glissement.

De façon caractéristique de l'invention, le mobile comprend en outre des moyens pour le montage amovible d'un drone à voilure tournante à rotors multiples formant groupe propulseur, les rotors étant aptes à exercer chacun une poussée avec une composante selon un axe principal de glissement du mobile, la commande proportionnelle et individualisée des rotors permettant le pilotage du mobile en vitesse et en direction.

Certains aspects préférés mais nullement limitatifs de ce mobile comprennent les caractéristiques suivantes, prises individuellement ou en toutes combinaisons que l'homme du métier appréhendera comme étant techniquement compatibles :
- la structure statique glissante est une structure mécanique dépourvue d'organe directionnel orientable, et dépourvue de moyens électroniques de contrôle et de commande de propulsion et/ou de direction ;
- les moyens de montage comprennent un bras articulé autour d'un axe transversal à l'axe principal de glissement du mobile ;
- le bras est libre en rotation, et il est prévu des moyens formant butée pour retenir le groupe propulseur dans une position de travail fixe par rapport à la structure lorsque les rotors sont entrainés en rotation, les rotors étant aptes à engendrer une poussée avec une composante dans l'axe principal de glissement du mobile ;
- le drone est un multicoptère ou quadricoptère préexistant utilisé sans autre modification que l'adaptation de son logiciel de contrôle à la progression et la direction du mobile ;
- quand le drone est un quadricoptère, les rotors sont aptes, entrainés en rotation, à faire passer progressivement sous le seul effet de leur poussée le groupe propulseur d'une position de rangement à ladite position de travail ;
- quand le drone est un quadricoptère, en position de travail une commande différenciée de deux paires de rotors situés respectivement à gauche et à droite par rapport à l'axe principal de déplacement est apte à contrôler le mobile en direction sans avoir à contrôler l'orientation d'un aileron de déjaugeage arrière, et/ou une commande différenciée de deux paires de rotors situés respectivement à plus grande distance et à plus petite distance de la structure est apte à commander le mobile en attitude ;
- la structure est apte à un déplacement aquatique et possède des ailerons de déjaugeage ;
- le mobile comprend au moins un aileron de déjaugeage avant à angle d'incidence positif ;
- le mobile comprend au moins un aileron de déjaugeage arrière à angle d'incidence négatif ;
- le mobile comprend deux ailerons de déjaugeage avant formant ensemble une configuration en "V" ;
- les ailerons de déjaugeage avant sont montés sur deux stabilisateurs latéraux s'étendant à partir d'une structure principale centrale, en étant orientés en oblique vers le bas et l'un vers l'autre ;
- le mobile comprend un aileron de déjaugeage arrière en forme de "T" inversé ;
- la structure définit au moins un volume flottable avant apte à s'opposer à un moment exercé par la poussée du groupe propulseur, tendant à lui conférer une attitude plongeante ;
- le centre de gravité du mobile est situé en arrière d'un centre d'application de la poussée du groupe propulseur par rapport à l'axe principal de glissement du mobile ;
- le mobile comprend un ensemble d'au moins trois patins pour un déplacement sur la neige ;
- le mobile comprend un ensemble d'au moins trois lames pour un déplacement sur la glace ;
- le mobile comprend des moyens de montage amovible des ailerons, aptes à recevoir en alternative les patins ou les lames.

D'autres aspects, buts et avantages de la présente invention apparaitront mieux à la lecture de la description détaillée suivante de formes de réalisation préférées de celle-ci, donnée à titre d'exemple non limitatif et en référence aux dessins annexés.
La Figure 1 est une vue en perspective d'un mobile selon l'invention, destiné à se déplacer sur l'eau, dans une position de déplacement.
La Figure 2 est une vue en élévation de côté du mobile de la Figure 1.
La Figure 3 est une vue en élévation de face du mobile des Figures 1 et 2.
La Figure 4 est une vue de dessus du mobile des Figures 1 à 3.
La Figure 5 est une vue en perspective de côté du mobile des Figures 1 à 4, dans une position au repos.
La Figure 6 est une vue selon la même orientation que la Figure 5, mais dans la position de déplacement du mobile.
La Figure 7 est une vue en perspective d'un mobile selon une première variante de l'invention, destiné à se déplacer sur neige.
La Figure 8 est une vue en perspective d'un mobile selon une deuxième variante de l'invention, destiné à se déplacer sur glace.
Les Figures 9 à 11 sont trois vues en perspective illustrant en détail la fixation d'un groupe propulseur sur le mobile des Figures 1 à 8.

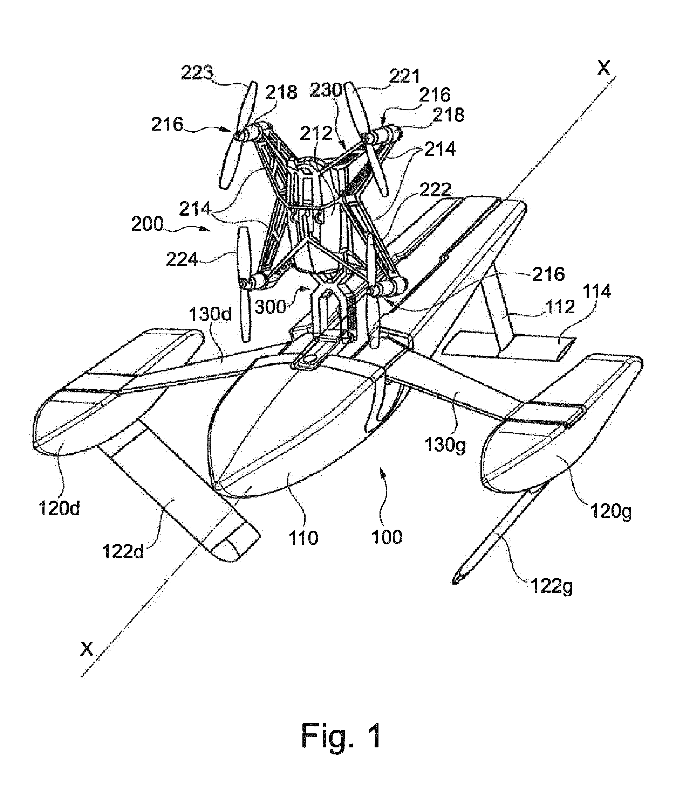

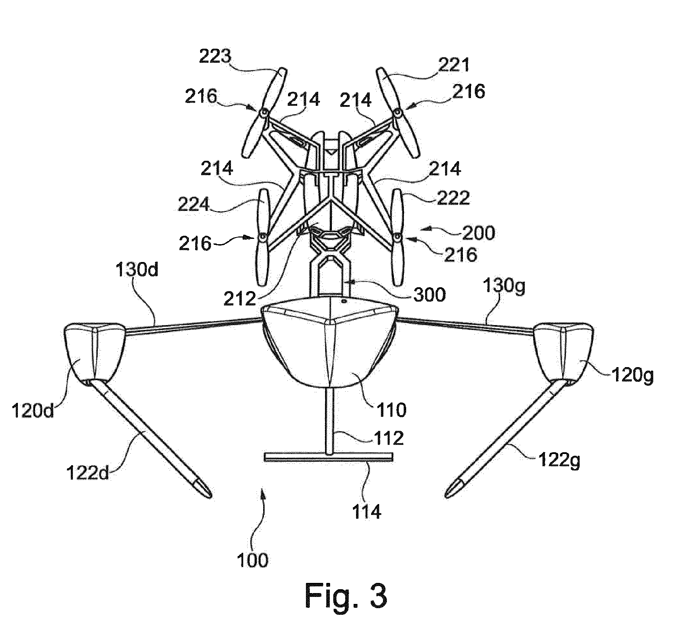

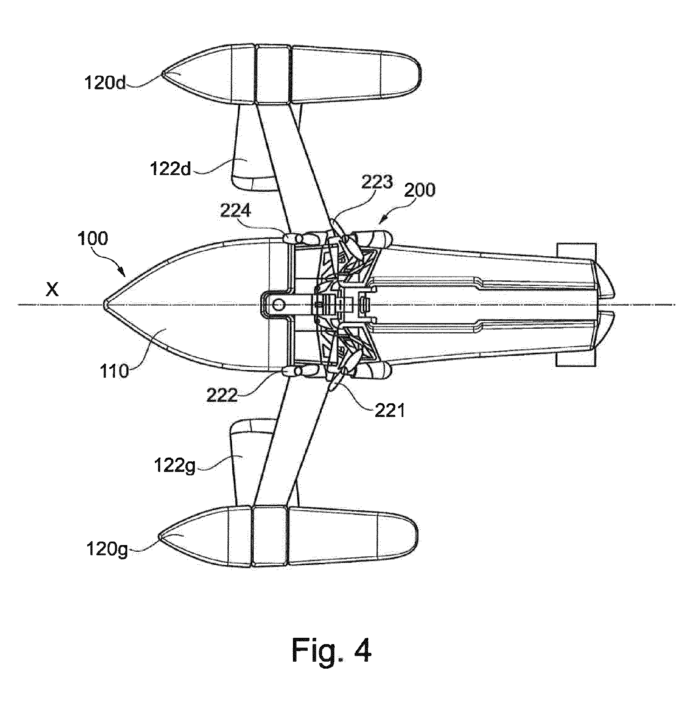

En référence aux Figures 1 à 6, on a représenté un mobile destiné à se déplacer sur l'eau sous l'action d'un groupe propulseur aérien. Il comprend une structure de flottaison et de navigation multicoque de type "hydrofoil" (hydroptère) globalement désignée par la référence 100, un groupe propulseur 200 et des moyens 300 de fixation amovible du groupe propulseur sur la structure.

La structure 100 est ici de type trimaran symétrique par rapport à un axe principal de glissement X-X de la structure, avec une partie centrale 110 creuse formée essentiellement d'une coque et d'un pont, un stabilisateur gauche 120g relié à la partie centrale par un bras 130g, et un stabilisateur droit 120d relié à la partie centrale par un bras 130d. Les stabilisateurs 120g, 120d sont également des pièces creuses formées essentiellement d'une coque et d'un pont.

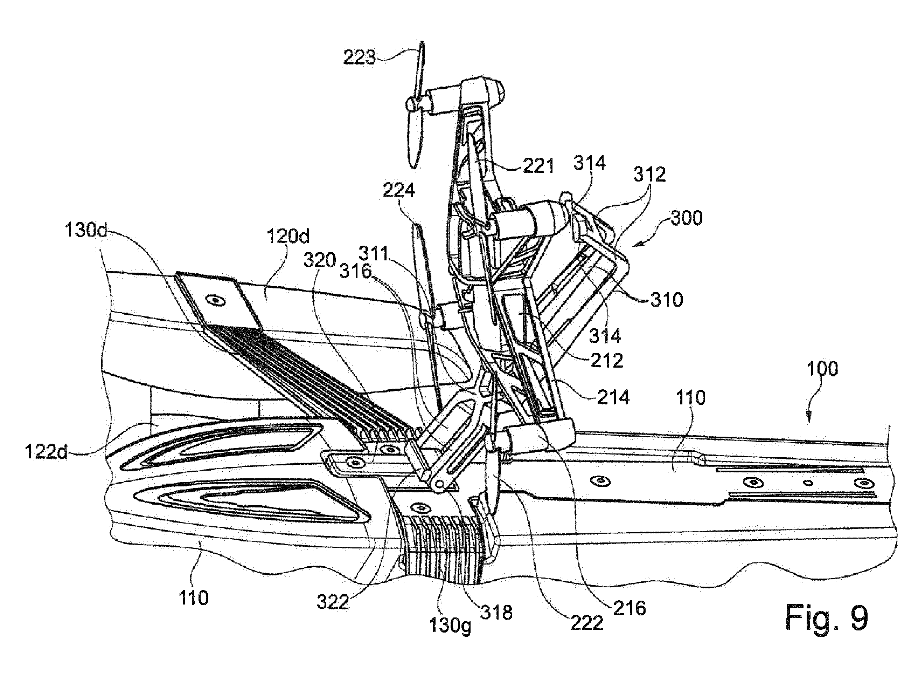

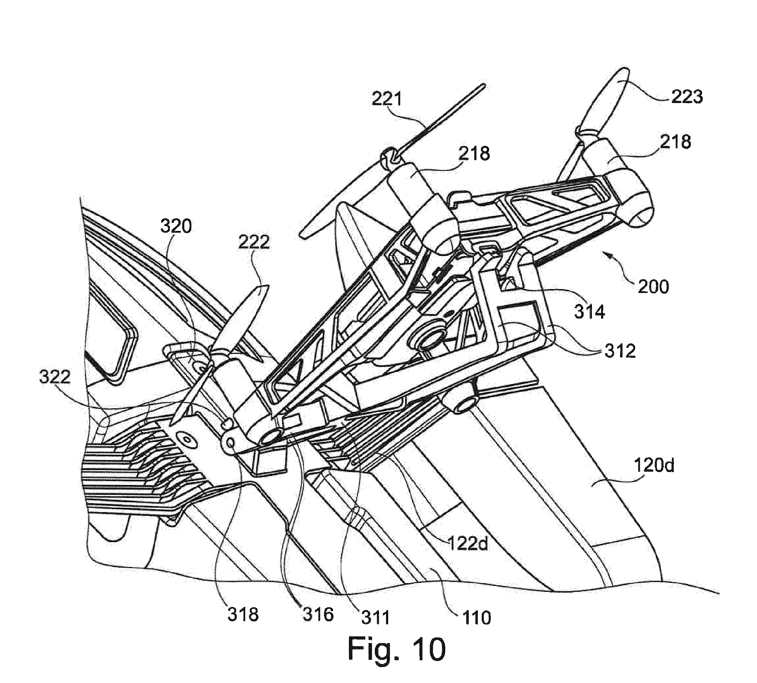

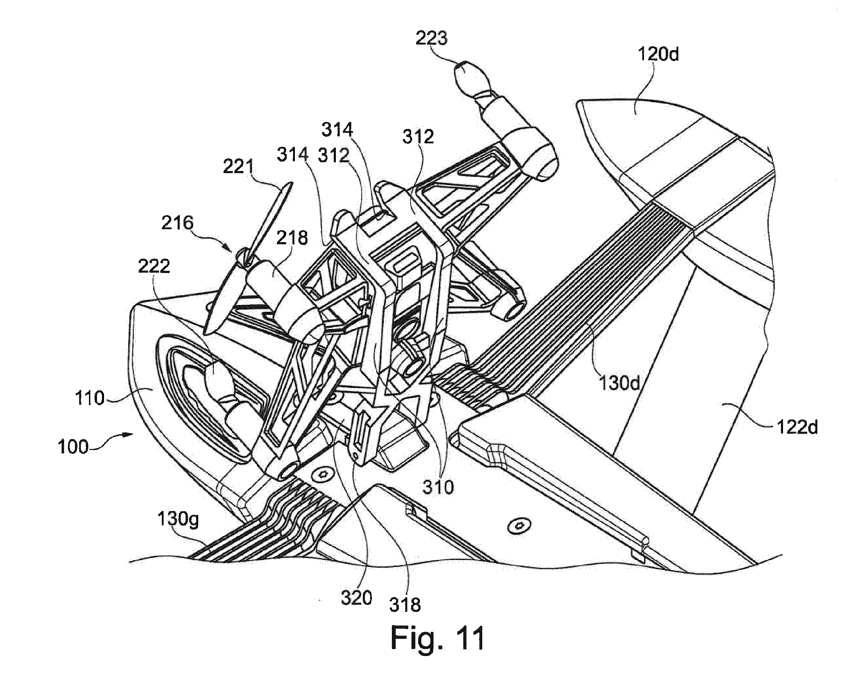

La structure 100 est réalisée de préférence en matière plastique. Les bras 130g, 130d sont avantageusement nervurés longitudinalement à des fins de rigidification, comme illustré sur les Figures 9 à 11.

Les stabilisateurs gauche et droit 120g, 120d comportent des ailerons de déjaugeage 122g, 122d, orientées en oblique de façon rentrante à partir d'une région inférieure des stabilisateurs. Ces ailerons sont disposés dans la région antérieure des stabilisateurs.

La partie centrale 110 comporte quant à elle dans la région postérieure de sa coque un aileron en T avec une partie verticale 112 et 114.

Les ailerons 122g, 122d, 112 et 114 sont fixes et présentent préférentiellement des profils standard de type NACA (*National Advisory Committee for Aeronautics*) ou analogues.

On observe que la structure 100 ne présente pas de gouvernail ou safran, le pilotage directionnel étant assuré par commande du groupe propulseur aérien. On décrira plus loin plus en détail les paramètres de positionnement et d'inclinaison des différents ailerons.

Avantageusement, le groupe propulseur aérien 200 est constitué par un drone de type quadricoptère du commerce, en l'occurrence par un "mi-nidrone" connu sous le nom de *Rolling Spider* commercialisé par la société Parrot SA, Paris, France.

De façon connue en soi, ce drone comprend un corps central 212 abritant une batterie amovible et une circuiterie de commande et de communication sans fil avec une télécommande distante, à partir duquel rayonnent quatre bras supports 214. Chaque bras support 214 est équipé à son extrémité distale d'un bloc propulseur 216 comprenant un moteur 218 entrainant en rotation une hélice, respectivement 221, 222, 223 et 224, les hélices s'étendant dans un plan décalé par rapport à celui des bras support 214.

Les quatre moteurs 221 à 224 sont pilotés indépendamment les uns des autres par un système intégré de navigation et de contrôle de direction, comme on le verra en détail plus loin.

Un tel groupe propulseur aérien peut être avantageusement piloté par l'intermédiaire d'un terminal tel qu'un téléphone ou baladeur multimédia à écran tactile et accéléromètre intégré, par exemple un téléphone cellulaire de type *iPhone* ou une tablette multimédia de type *iPad* (marques déposées de Apple Inc., USA). Ces appareils incorporent les divers organes de contrôle nécessaires à la détection des commandes de pilotage et à l'échange bidirectionnel de données avec le groupe propulseur via une liaison sans fil de type réseau local *Bluetooth* ou *Wi-Fi* (IEEE 802.11) (marques déposées). Ils sont en outre pourvus d'un écran tactile permettant d'afficher un certain nombre de symboles pour l'activation de commandes par simple contact du doigt de l'utilisateur sur cet écran tactile.

Des capteurs inertiels (accéléromètres et gyromètres) mesurent avec précision les vitesses angulaires et les angles d'attitude du groupe propulseur, et donc de l'ensemble du mobile sur lequel il est arrimé comme on va maintenant le voir.

En référence aux Figures 9 à 11, on a illustré par trois vues en perspective la façon dont le groupe propulseur 200 est monté sur la structure de flottaison et de navigation 100. Un bras globalement désigné par la référence 300 est monté de façon articulée autour d'un axe 318 orienté transversalement à l'axe de progression du mobile. Ce bras comporte deux branches latérales généralement parallèles 310, 310, orientées perpendiculairement à l'axe d'articulation 318 et formant ensemble un berceau dans lequel le corps central 212 du groupe propulseur peut venir se caler intimement, par sa face inférieure opposée aux hélices.

Ce berceau se prolonge, du côté de l'extrémité libre du bras, par deux pattes de verrouillage 312, 312 orientées sensiblement à angles droits par rapport aux branches 310, 310 et se terminant par deux dents de verrouillage 314, 314 aptes à s'accrocher sur des aménagements préexistants (non visibles) prévus sur le dessus du corps central 212 du groupe propulseur.

En direction de l'axe d'articulation 318, le berceau défini par les branches 310, 310 se prolonge, au-delà d'une zone 311 où les branches 310, 310 sont réunies, par deux autres branches 316 traversées dans la région de leurs extrémités libres par des orifices circulaires dans lesquels l'axe 318 est engagé.

Le montage du groupe propulseur 200 sur la structure 100 s'effectue d'une manière extrêmement simple en pressant légèrement le corps central 212 du groupe dans le berceau formé par les bras 310 jusqu'à ce que les dents 314 viennent s'accrocher sur le dessus du corps 212 et bloquer le groupe propulseur 200 dans son berceau. Il est important que ce montage s'effectue sans jeu, de façon à ce que la commande du groupe propulseur pour animer le mobile s'effectue de la façon la plus précise possible, et sans vibrations parasites, comme on va le voir en détail plus loin. Le démontage du groupe propulseur s'effectue simplement en tirant les pattes de verrouillage 312, 312 à l'aide des doigts pou dégager les dents 314, 314 et libérer le groupe propulseur.

Par ailleurs, il est prévu un dispositif de butée pour le bras 300, sous forme d'une pièce 320 fixée sur le pont de la partie de structure centrale 110 et qui présente un bourrelet rigide 322 orienté parallèlement à l'axe d'articulation 318. Lorsque le bras 300 pivote d'une position dirigée généralement vers l'arrière du mobile vers une position debout, le bourrelet 322 bloque le déplacement angulaire du bras, et donc du groupe propulseur 200 qu'il porte, dans une position angulaire bien précise, comme on va le voir dans la suite.

On va maintenant expliquer le fonctionnement, le pilotage et le comportement du mobile aquatique tel que décrit dans ce qui précède.

En premier lieu, on a vu que le mobile ne comportait aucun organe directionnel en contact avec l'eau, le contrôle directionnel gauche-droite étant assuré en commandant les hélices gauches 221, 222 et droites 223, 224 de façon différenciée - une poussée plus importante avec les hélices gauches entrainant un changement directionnel vers la droite, et inversement.

Ce pilotage est réalisé avantageusement par programmation appropriée du terminal de pilotage à distance, les changements de direction étant assurés par des simples ordres tactiles, ou par inclinaison du terminal, avec préférentiellement une commande progressive.

En second lieu, le recours à un groupe propulseur possédant des hélices situées à des hauteurs différentes permet de réguler l'attitude en tangage du mobile, une poussée plus importante avec les hélices les plus hautes permettant de baisser l'avant du mobile, tandis qu'une poussée accrue avec les hélices basses permet au contraire de redresser le mobile lorsqu'il a tendance à piquer.

Avantageusement, ce contrôle d'assiette en tangage s'effectue automatiquement grâce aux capteurs inertiels équipant intrinsèquement le groupe propulseur. Ce pilotage de l'assiette est particulièrement avantageux en ce qu'il permet, avec un jeu d'ailerons de déjaugeage qui sont tous fixes, d'avoir le même effet que des ailerons de déjaugeage à commande d'orientation comme dans certains hydrofoils connus.

On comprend de ce qui précède est que la structure 100 du mobile peut être une simple structure mécanique sans pièces de navigation mobiles et totalement dépourvue d'électronique, ce qui lui confère avantageusement robustesse, légèreté et faible coût de revient.

À propos des ailerons 112, 114, 122g et 122d, ceux-ci sont placés et dimensionnés de façon à ce que, lorsque le groupe propulseur exerce sa poussée à l'aide des hélices, le mobile déjauge rapidement pour atteindre une position de "vol" (survol du plan d'eau), le contact avec le milieu aquatique existant seulement par les ailerons, avec par conséquent une trainée extrêmement limitée et une vitesse de déplacement importante même en présence d'une force de poussée limitée.

On notera que la configuration des ailerons, avec une structure d'ailerons avant en "V" à partir de deux stabilisateurs latéraux et une structure d'aileron arrière en "T" retourné à partir de la structure centrale, est une structure autostable si l'on ajuste convenablement les angles d'incidence des ailerons.

On comprend que le déjaugeage se produit si les angles d'attaque des ailerons avant 122g, 122d sont positifs par rapport à la surface de l'eau. Durant cette phase, le volume flottable de la coque centrale et des stabilisateurs dans la région avant du mobile contribue également au déjaugeage et évite l'enfournement, notamment dans l'hypothèse où un changement d'attitude du mobile à l'avant du mobile, lié par exemple à l'agitation du plan d'eau, engendrerait un angle d'attaque négatif.

Par ailleurs, étant observé que le centre de poussée du groupe propulseur 200 se situe au niveau du corps central 212 de celui-ci et donc bien au-dessus du niveau de flottaison avant déjaugeage, il est nécessaire de contrer l'effet de basculement vers l'avant en plongée causé par le moment de cette poussée.

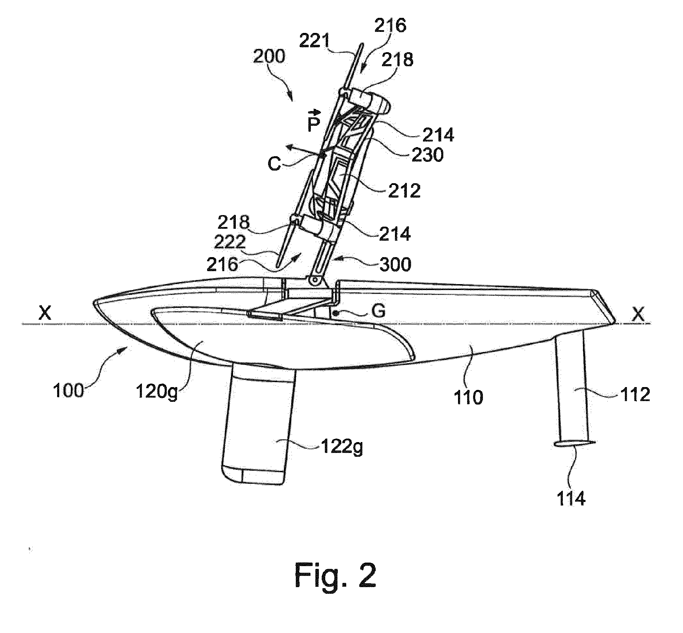

Globalement, un déjaugeage et une mise en vol satisfaisants sont assurés lors de la mise en route du groupe propulseur grâce à la combinaison des caractéristiques suivantes :
- positionnement du centre de gravité G du mobile en arrière du centre de portance C où s'applique la poussée P (voir Figure 2), c'est-à-dire à l'inverse de ce qui est pratiqué pour les aéronefs ;
- angle d'incidence des ailerons avant 122g, 122d positif comme on l'a vu ci-dessus, avec une valeur typiquement comprise entre 3° et 10° et de préférence voisine de 6° avec la configuration illustrée sur les dessins ;
- angle d'incidence de partie horizontale 114 de l'aileron arrière légèrement négative, avec une valeur typiquement comprise entre -1° et -5° et de préférence voisine de -3° avec la configuration illustrée sur les dessins, pour là encore contribuer à s'opposer au moment de basculement lié à la poussée lorsque le mobile commence à se déplacer
- recours à un volume flottable à l'avant suffisant en soi pour au moins compenser le moment de basculement, comme on l'a également vu dans ce qui précède, notamment au début de la mise en mouvement alors que la vitesse est encore faible et que l'effet de l'angle d'incidence des ailerons ne fait que s'amorcer ;
- orientation de la poussée à la fois vers l'avant et vers le haut, grâce à la disposition légèrement en oblique du plan des hélices par rapport à un plan perpendiculaire à l'axe horizontal du mobile (voir notamment Figure 2) ; cette obliquité, assurée grâce à la pièce de butée 320, est avantageusement comprise entre 10° et 25° et de préférence voisine de 15° avec la configuration illustrée.

On notera que dans le cas où le drone constituant le groupe propulseur 200 possède des capteurs (caméra, altimètre à ultrasons, etc.) destinés à être utilisés en mode de vol aérien, ceux-ci sont avantageusement désactivés (à distance, via le terminal tactile) pour une utilisation avec la structure à déplacement aquatique de l'invention.

On va maintenant décrire les différents contrôles de démarrage et de déplacement du mobile décrit ci-dessus.

### a) Démarrage

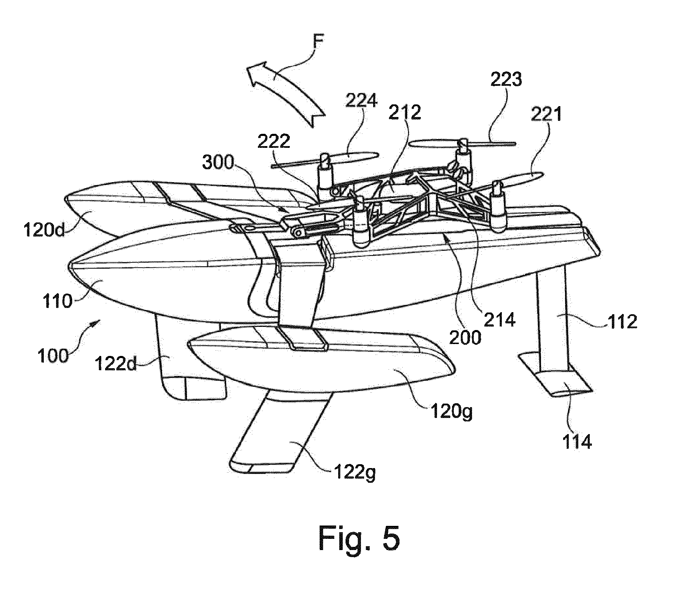

On a illustré sur la Figure 5 le mobile dans une situation où le groupe propulseur est à l'arrêt. Dans ce cas, il repose par le simple effet de la gravité contre le pont de la structure centrale 110, rendant son transport et sa manipulation aisée.

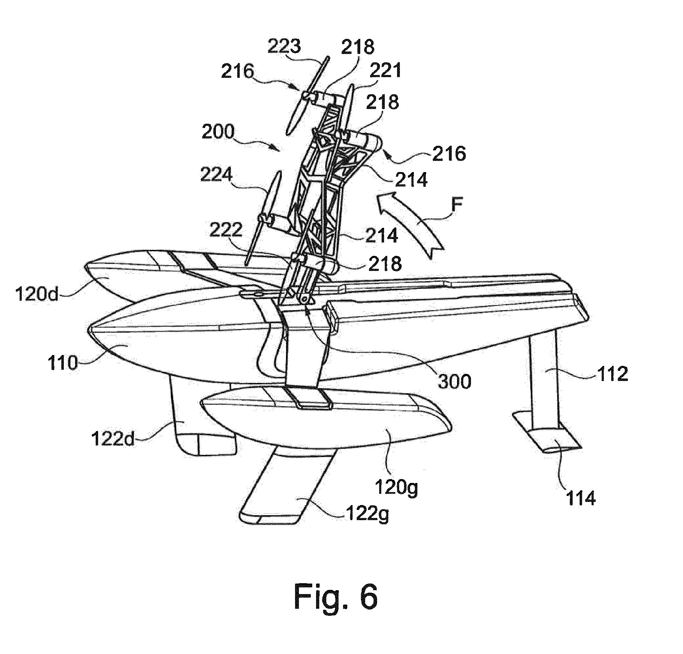

Lorsque le groupe propulseur est mis en route, par exemple par un bouton de commande "Démarrage" sur l'interface tactile du terminal de commande, les quatre hélices sont mises en rotation simultanément, de façon à engendrer une pousser vers le haut qui va faire basculer le groupe propulseur 200 vers le haut et vers l'avant autour de l'axe d'articulation 318 du bras 300 (flèche F sur les Figures 5 et 6), jusqu'à la venue en appui du bras 300 contre la pièce de butée 320. La position finale est illustrée sur la Figure 6 notamment. À partir de là, la poussée exercée par le groupe propulseur 200 maintient cet appui tout au long du déplacement, la structure 100 et le groupe propulseur 200 étant considérés comme fixes l'un par rapport à l'autre sans que le bras 300 n'ait à être bloqué d'une quelconque manière, et le pilotage étant assuré comme on va le voir plus loin. On notera ici que la vitesse de rotation des hélices est avantageusement contrôlée de façon à ce que le mouvement de levée du groupe propulseur soit progressif, en évitant notamment de "taper" trop brusquement contre la pièce de butée 320.

Lorsque le groupe propulseur est arrêté, la force de la gravité le ramène naturellement dans la position illustrée sur la Figure 5. Ici encore, l'arrêt est avantageusement progressif de manière à éviter que le groupe propulseur ne heurte trop violemment le pont de la structure centrale 110. On observera ici que cette remise à plat automatique du groupe propulseur lors de l'arrêt du mobile permet également, en rabaissant le centre de gravité de l'ensemble du mobile, d'éviter à celui-ci de basculer.

### b) Contrôle de progression

Les quatre hélices 221-224 étant situés dans un plan proche de la verticale, elles engendrent une poussée que l'on peut faire varier manuellement à l'aide du terminal de commande, qui en fonction des actions de l'utilisateur (action tactile ou inclinaison du terminal) envoie par la liaison sans fil les consignes de vitesse de rotation aux moteurs respectifs des hélices.

### c) Contrôle de direction

Ce contrôle, là encore en réponse à des actions manuelles de l'utilisateur au niveau du terminal de commande, est basé sur des consignes de rotation potentiellement différentes adressées aux moteurs des hélices gauches 221, 222 et aux moteurs des hélices droites 223, 224. La commande différentielle est de préférence proportionnelle, pour réaliser des virages plus au moins prononcés. Là encore, il peut s'agir d'une action sur l'interface tactile ou d'une inclinaison plus ou moins prononcée du terminal. On a vu plus haut que le recours à un groupe propulseur à plusieurs hélices situées de part et d'autre de l'axe de déplacement du mobile permettait de se passer de tout gouvernail ou autre organe directionnel à déplacement physique.

### d) Contrôle de la répartition de poussée

On comprend qu'en commandant de façon différenciée la rotation des hélices supérieures 221, 223 et la rotation des hélices inférieures 222, 224, il est possible de jouer sur la position où s'exerce la poussée cumulée des quatre hélices.

Lorsque les vitesses de rotation sont identiques, la poussée s'exerce au niveau du centre géométrique des hélices.

Lorsque la répartition des vitesses est différente, le centre de poussée se déplace vers le haut (rotation plus rapide des hélices supérieures) ou vers le bas (rotation plus rapide des hélices inférieures). Il en résulte une variation de la valeur du moment exercé par le groupe propulseur 200 sur le mobile. Ainsi, par une commande appropriée des vitesses des hélices supérieures et inférieures, il est possible d'ajuster l'attitude du mobile en tangage. Cette commande peut être réalisée soit manuellement sur le terminal de commande (interface tactile ou changement d'inclinaison de la tablette), soit automatiquement pour stabiliser l'attitude du mobile, avec une boucle de régulation basée sur les signaux fournis par les capteurs inertiels équipant le groupe propulseur.

On peut ici encore restituer l'effet d'ailerons de déjaugeage à angle d'attaque variable bien que les ailerons soient fixes.

On a décrit ci-dessus un mobile destiné à se déplacer sur l'eau en étant mû par le groupe propulseur. Il est toutefois possible d'adapter la structure 100 pour que le mobile puisse se déplacer sur la neige ou la glace.

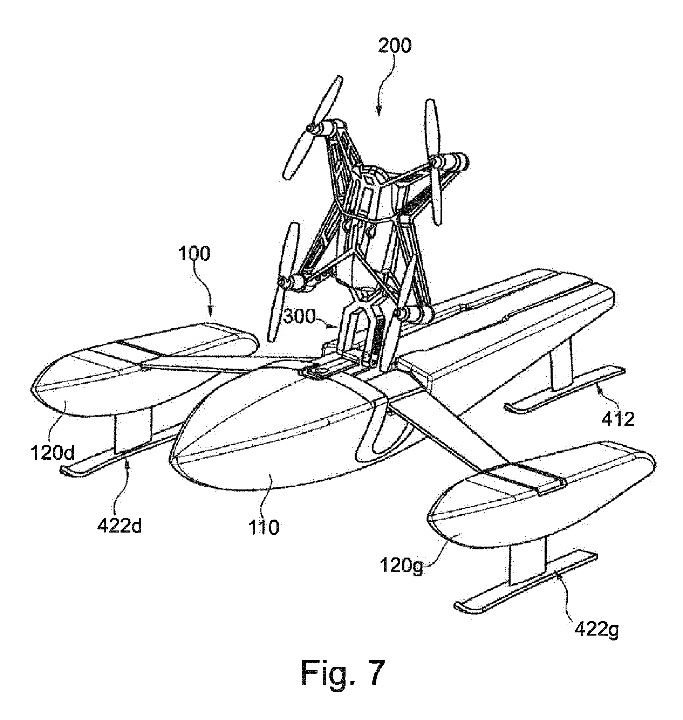

Ainsi la Figure 7 illustre un mobile où les ailerons 122g, 122d, 112 et 114 sont remplacés par des patins en forme de skis, respectivement 422g, 422d et 412, portés par des montants respectifs, pour un déplacement sur la neige.

À cet effet, il est avantageux que, dans la forme de réalisation décrite en référence aux Figures 1 à 6, les ailerons de déjaugeage soient assemblés sur les stabilisateurs et sur la coque centrale d'une manière qui soit facilement démontable (encastrement avec frottement, encliquetage, vissage quart de tour, etc.).

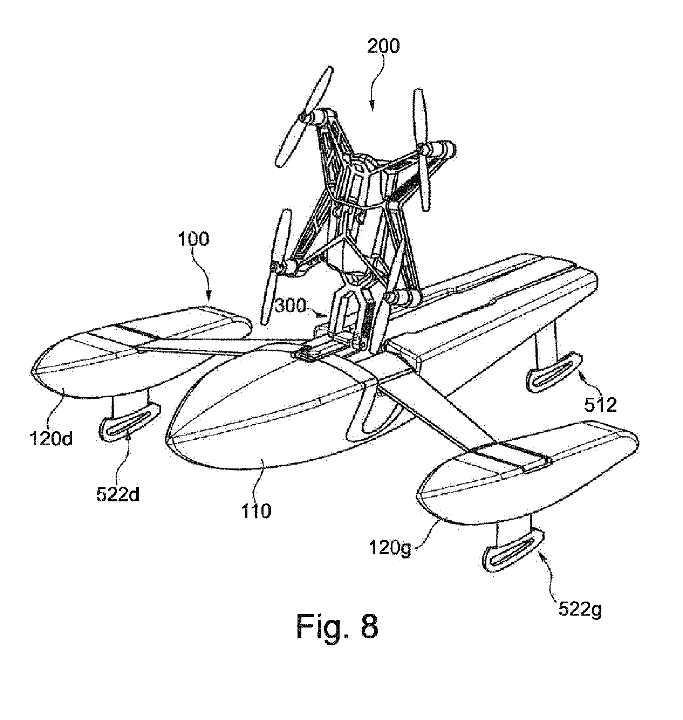

La Figure 8 illustre quant à elle une variante où les ailerons 122g, 122d, 112 et 114 sont remplacés par des lames verticales incurvées, respectivement 522g, 522d et 512, portées par des montants respectifs, pour un déplacement sur la glace.

Avantageusement, le ski arrière 412 ou le patin arrière 512 peut pivoter sur un axe vertical, pour faciliter les changements directionnels.

D'autres types d'accessoires sont bien entendu possibles.

Bien entendu, la présente invention peut faire l'objet de nombreux ajustements, variantes et modifications. En particulier :
- le drone qui est utilisé comme groupe propulseur peut faire l'objet d'adaptations : notamment, compte tenu d'une utilisation dans une attitude différente de celle pour laquelle il est normalement destiné (plan d'hélices pratiquement vertical alors qu'il est horizontal en mode drone), il peut être nécessaire d'ajuster l'antenne d'émission/réception équipant le drone pour améliorer la transmission des signaux entre lui et le poste de commande ;
- la structure de flottaison et de navigation peut avoir des dimensions dans une large gamme, adaptées au type de groupe propulseur qu'elle reçoit (par exemple une longueur et une largeur de quelques dizaines de centimètres, jusqu'à un mètre ou davantage) ;
- le groupe propulseur, pour assurer le pilotage directionnel et en attitude, peut comporter un nombre variable d'hélices, avec au minimum trois hélices (par exemple deux hélices inférieures gauche et droite et une hélice supérieure centrale), mais de façon particulièrement préférée quatre hélices comme illustré.

## Revendications

1. Un mobile comprenant une structure statique glissante (100) pourvue dans une région inférieure d'un ensemble d'éléments de glissement (110, 120g, 120d : 122g, 122d, 112, 114 ; 422g, 422d, 412 ; 522g, 522d, 512), **caractérisé en ce qu'**il comprend en outre des moyens (300) pour le montage amovible d'un drone à voilure tournante à rotors multiples (221-224) formant groupe propulseur (200), les rotors étant aptes à exercer chacun une poussée avec une composante selon un axe principal (X-X) de glissement du mobile, la commande proportionnelle et individualisée des rotors (221-224) permettant le pilotage du mobile en vitesse et en direction.

2. Le mobile de la revendication 1, dans lequel la structure statique glissante (100) est une structure mécanique dépourvue d'organe directionnel orientable.

3. Le mobile de la revendication 1, dans lequel la structure statique glissante (100) est une structure mécanique dépourvue de moyens électroniques de contrôle et de commande de propulsion et/ou de direction.

4. Le mobile de la revendication 1, dans lequel le drone est un multicoptère ou quadricoptère préexistant utilisé sans autre modification que l'adaptation de son logiciel de contrôle à la progression et la direction du mobile.

5. Le mobile de la revendication 1, dans lequel les moyens de montage comprennent un bras (300) articulé autour d'un axe (318) transversal à l'axe principal (X-X) de glissement du mobile.

6. Le mobile de la revendication 5, dans lequel le bras est libre en rotation, et en ce qu'il est prévu des moyens formant butée (320, 322) pour retenir le groupe propulseur dans une position de travail fixe par rapport à la structure (100) lorsque les rotors sont entrainés en rotation, les rotors étant aptes à engendrer une poussée avec une composante dans l'axe principal de glissement du mobile.

7. Le mobile de la revendication 6, dans lequel, quand le drone est un quadricoptère, les rotors (221-224) sont aptes, entrainés en rotation, à faire passer progressivement sous le seul effet de leur poussée le groupe propulseur (200) d'une position de rangement à ladite position de travail.

8. Le mobile de la revendication 1, dans lequel, quand le drone est un quadricoptère, en position de travail une commande différenciée de deux paires de rotors (221, 222 ; 223, 224) situés respectivement à gauche et à droite par rapport à l'axe principal de déplacement est apte à contrôler le mobile en direction sans avoir à contrôler l'orientation d'un aileron de déjaugeage arrière.

9. Le mobile de la revendication 1, dans lequel, quand le drone est un quadricoptère, en position de travail une commande différenciée de deux paires de rotors (221, 223 ; 222, 224) situés respectivement à plus grande distance et à plus petite distance de la structure (100) est apte à commander le mobile en attitude.

10. Le mobile de la revendication 1, dans lequel la structure (100) est apte à un déplacement aquatique et possède des ailerons de déjaugeage (122g, 122d, 112, 114).

11. Le mobile de la revendication 10, comprenant au moins un aileron de déjaugeage avant (122g, 122d) à angle d'incidence positif.

12. Le mobile de la revendication 10, comprenant au moins un aileron de déjaugeage arrière (114) à angle d'incidence négatif.

13. Le mobile de la revendication 10, comprenant deux ailerons de déjaugeage avant (122g, 122d) formant ensemble une configuration en "V".

14. Le mobile de la revendication 13, dans lequel les ailerons de déjaugeage avant sont montés sur deux stabilisateurs latéraux (120g, 120d) s'étendant à partir d'une structure principale centrale, en étant orientés en oblique vers le bas et l'un vers l'autre.

15. Le mobile de la revendication 10, comprenant un aileron de déjaugeage arrière (112, 114) en forme de "T" inversé.

16. Le mobile de la revendication 10, dans lequel la structure définit au moins un volume flottable avant (110, 120g, 120d) apte à s'opposer à un moment exercé par la poussée du groupe propulseur, tendant à lui conférer une attitude plongeante.

17. Le mobile de la revendication 10, dans lequel le centre de gravité (G) du mobile est situé en arrière d'un centre (C) d'application de la poussée du groupe propulseur (200) par rapport à l'axe principal (X-X) de glissement du mobile.

18. Le mobile de la revendication 1, comprenant un ensemble d'au moins trois patins (422g, 422d, 412) pour un déplacement sur la neige.

19. Le mobile de la revendication 1, comprenant un ensemble d'au moins trois lames (522g, 522d, 512) pour un déplacement sur la glace.

20. Le mobile des revendications 18 ou 19, comprenant des moyens de montage amovible d'ailerons (122g, 122g, 112, 114), aptes à recevoir en alternative les patins ou les lames.
